# EUROPÄISCHE PATENTSCHRIFT

(11) **EP 0 860 227 B1**
(45) Veröffentlichungstag und Bekanntmachung des Hinweises auf die Patenterteilung: **23.07.2003**
(21) Anmeldenummer: 97121418.4
(22) Anmeldetag: 05.12.1997
(51) Int. Cl.: B23C 5/24

(54) **Plan- oder Eckfräser**
Face- or corner milling cutter
Fraise pour surfaces planes ou coins

(30) Priorität: 19.02.1997 DE 19706377
(43) Veröffentlichungstag der Anmeldung: 26.08.1998
(73) Patentinhaber: Fette GmbH, 21493 Schwarzenbek (DE)
(72) Erfinder: Bentjens, Bernhard, 21493 Schwarzenbek (DE); Schunk, Uwe, 23554 Lübeck (DE); Wagner, Reinhard, 21514 Büchen (DE); Dehn, Gerhard, 23879 Mölln (DE); Kölker, Werner, Dr., 23909 Ratzeburg (DE)
(74) Vertreter: Patentanwälte Hauck, Graalfs, Wehnert, Döring, Siemons, Schildberg

(56) Entgegenhaltungen:
- EP-A- 0 049 796
- DE-A- 3 007 322
- DE-A- 4 437 426
- GB-A- 949 598
- US-A- 1 368 459
- PATENT ABSTRACTS OF JAPAN vol. 9, no. 135 (M-386) [1858] , 11.Juni 1985 & JP 60 016311 A (MITSUBISHI KINZOKU), 28.Januar 1985,

## Beschreibung

Die Erfindung bezieht sich auf einen Plan- oder Eckfräser nach dem Oberbegriff des Patentanspruchs 1.

Bekanntlich können in Fräserwerkzeugen mit Hilfe geeigneter Spannvorrichtungen Schneidplatten oder -einsätze unmittelbar gegen entsprechende Sitzflächen eines Trägerkörpers gespannt werden oder in sogenannte Kassetten, die ihrerseits am Trägerkörper befestigt werden. Die vorliegende Erfindung bezieht sich auf Kassettenfräser.

Aus DE 44 37 426 A ist ein Plan- oder Eckfräser bekanntgeworden, bei dem die Kassetten in Umfangstaschen eines Trägerkörpers aufgenommen sind. Die Umfangstaschen erstrecken sich parallel zur Drehachse des Trägerkörpers, und die Kassetten werden mit Hilfe einer Befestigungsschraube gegen den Boden der Taschen gezogen und daran befestigt. Die Achse der Gewindebohrung im Trägerkörper ist in einem Winkel zur entsprechenden Radialebene, um die Kassette zusätzlich gegen eine ringförmige Stützwand der Taschen anzupressen. Die Stützwand wird von einem getrennten ringförmigen Bauteil gesichert. Zur Axialverstellung der Kassetten ist in Höhe jeder Tasche auf der der freien Stirnseite gegenüberliegenden Seite eine Bohrung für eine einen Exzenter aufweisende Einstellschraube vorgesehen, wobei der Exzenterabschnitt gegen das zugeordnete Ende der Kassette zur Anlage gebracht wird. Soll die Kassette weiter in Richtung freier Stirnseite verschoben werden, erfolgt über ein entsprechendes Werkzeug eine Verdrehung der Einstellschraube, bis die gewünschte Einstellung erreicht ist. Eine Verstellung in umgekehrter Richtung kann mit Hilfe der Einstellschraube nicht durchgeführt werden, vielmehr muß diese auf den kleinsten Abstand verdreht werden, um anschließend mit Hilfe eines Schlagwerkzeuges oder dergleichen die Kassette gegen den Exzenterabschnitt zur Anlage zu bringen.

Aus WO94/25211 ist ferner ein Fräswerkzeug bekanntgeworden, bei dem der Trägerkörper ebenfalls achsparallele Taschen am Umfang aufweist zur Aufnahme von Kassetten. Die Kassetten können in axialer und in radialer Richtung erstellt werden. Zur Verstellung in radialer Richtung ist eine Verstellschraube in eine radiale Gewindebohrung der Kassette eingeschraubt, wobei ihr inneres Ende mit dem Grund der Tasche zusammenwirkt. Zur axialen Verstellung ist eine radiale Gewindebohrung im Grund der Tasche vorgesehen, die einen Schraubstift mit einem exzentrischen Kopf aufweist, der mit einer Nut an der Unterseite der Kassette zusammenwirkt. Oberhalb der Nut erstreckt sich eine im Durchmesser etwas kleinere radiale Bohrung, über die ein Werkzeug zur Verdrehung des exzentrischen Kopfes eingeführt werden kann. Die Kassette ist an der Rückseite mit einer radialen bzw. achsparallelen Zahnung versehen, die mit einer entsprechenden Zahnung eines Abstandelements zusammenwirkt, das seinerseits eine achsparallele oder radial Verzahnung aufweist, die mit einer entsprechenden Verzahnung an der zugehörigen Wand der Tasche zusammenwirkt. Ist eine Einstellung der Kassette in der beschreiben Art und Weise durchgeführt, wird mindestens eine Klemmschraube, die in einer schrägen Gewindebohrung des Trägerkörpers eingeschraubt ist, angezogen zwecks Anlage an die Kassette, um diese klemmend (d.h. kraftschlüssig) in die Tasche zu verspannen.

Aus DE 30 07 322 A ist ein Scheibenfräser bekannt geworden mit einem Trägerkörper, der an seinem Umfang in gleichmäßig oder ungleichmäßig verteilten Abständen Taschen aufweist, die sich parallel zur Drehachse des Trägerkörpers erstrecken für die Aufnahme von Kassetten, die ihrerseits Sitzflächen aufweisen für die Aufnahme von Schneidplatten. Die Schneidplatten werden mit Hilfe von Keilen in den Kassetten festgelegt, und die Kassetten sind mit Hilfe einer Schraubbefestigung im Trägerkörper befestigt. Ferner sind Einstellschrauben für eine begrenzte axiale Verstellung der Kassetten in den Taschen vorgesehen, wobei die Einstellschrauben in Gewindebohrungen des Trägerkörpers sitzen, die von einer Stirnseite des Trägerkörpers ausgehend annähernd parallel zur Drehachse des Trägerkörpers angeordnet sind. Die Einstellschrauben werden von der freien Stirnseite in den Trägerkörper eingeschraubt. Die Lage der Kassette wird vor dem Einbau der Schneidplatten eingestellt. Eine Verstellung nach dem Festklemmen der Schneidplatten mit Hilfe der Keile ist nicht mehr möglich.

Der Erfindung liegt die Aufgabe zugrunde, einen Plan- oder Eckfräser in Form eines Kassettenfräsers zu schaffen, bei dem auf einfache Weise eine genau aktive Verstellung der Kassetten in beiden Verstellrichtungen ermöglicht ist, um einen präzisen Planlauf zu gewährleisten.

Diese Aufgabe wird durch die Merkmale des Patentanspruchs 1 gelöst.

Wie beim Stand der Technik ist beim erfindungsgemäßen Eckfräser eine Einstellschraube in einer Gewindebohrung des Trägerkörpers angeordnet, die, von der Stirnseite des Trägerkörpers ausgehend, sich annähernd parallel zur Drehsachse des Trägerkörpers erstreckt. Eine derartige Anordnung der Einstellschraube ist besonders einfach zugänglich. Die Zugänglichkeit ist nicht abhängig von der des Planoder Eckfräsers. Bei entsprechender Ausgestaltung von Kassette und Einstellschraube läßt sich darüber hinaus auf einfache Weise eine aktive Verstellung der Kassette in beiden Richtungen, d.h. auf die freie Stirnseite zu bzw. von ihr fort, erreichen. Dies erfolgt in der Weise, daß der Kopf der Einstellschraube mit einer Nut am Boden der Kassette zusammenwirkt Je nach Drehrichtung wird mithin die Kassette von der Stirnseite fort oder auf sie zu bewegt. Es versteht sich, daß die Verstellwege naturgemäß relativ gering sind und sich nur im Toleranzbereich bewegen können, der durch die Festlegung der Kassette vorgegeben ist. Diese bestimmt die Grobeinstellung, während durch die Einstellschraube die Feineinstellung erfolgt. Die Festlegung der Schneidplatte in der Kassette wird mittels einer Klemmschraube durchgeführt.

Der Kopf der Einstellschraube wirkt mit einer Nut am Boden der Kassette zusammen, in der er annähernd passend aufgenommen ist.

Bei der Erfindung weist der Trägerkörper zur freien Stirnseite hin einen stetig kleiner werdenden Außendurchmesser auf, so daß Spankammern für die Spanabfuhr gebildet sind. Es kann daher zwecks Anpassung an eine unterschiedliche Anzahl verschieden großer Schneidplatten eine verhältnismäßig groß dimensionierte Kassette verwendet werden, ohne daß Probleme bei der Spanabfuhr entstehen. Durch den im Außendurchmesser nahe der freien Stirnseite klein dimensionierten Träger ist ein ausreichend großer Spanabfuhrraum geschaffen.

Vorzugsweise werden die Schneidplatten mit Hilfe eines Spannhebels in der Kassette gehalten, der mittels der Klemmschraube, die sich durch eine Bohrung des Spannhebels erstreckt, kippend gegen die Schneidplatte gespannt wird. Wahlweise kann die Kassette die Schneidplatten auch mittels Schraubbefestigung aufnehmen, wenn die Kassette mit einer entsprechenden Gewindebohrung im Plattensitz versehen ist. Es versteht sich, daß die Schneidplatte dann ebenfalls eine Durchbohrung aufweisen muß. Bei dieser Befestigungsart kann dann die Gewindebohrung in der Kassette für die Spannhebelbefestigung durch einen Blindstopfen verschlossen werden.

Die Erfindung wird nachfolgend anhand von Zeichnungen näher erläutert.
- Fig. 1: zeigt perspektivisch einen Eckfräserkopf gemäß einem Ausführungsbeispiel der Erfindung.
- Fig. 2: zeigt einen Teil des Fräskopfes nach Fig. 1 in Stirnansicht.
- Fig. 3: zeigt einen Schnitt durch die Darstellung nach Fig. 2 entlang der Linie 3-3.
- Fig. 4: zeigt teils im Schnitt, teils in einer 90° gegenüber Fig. 2 versetzten Seitenansicht den Fräskopf nach Fig. 1.

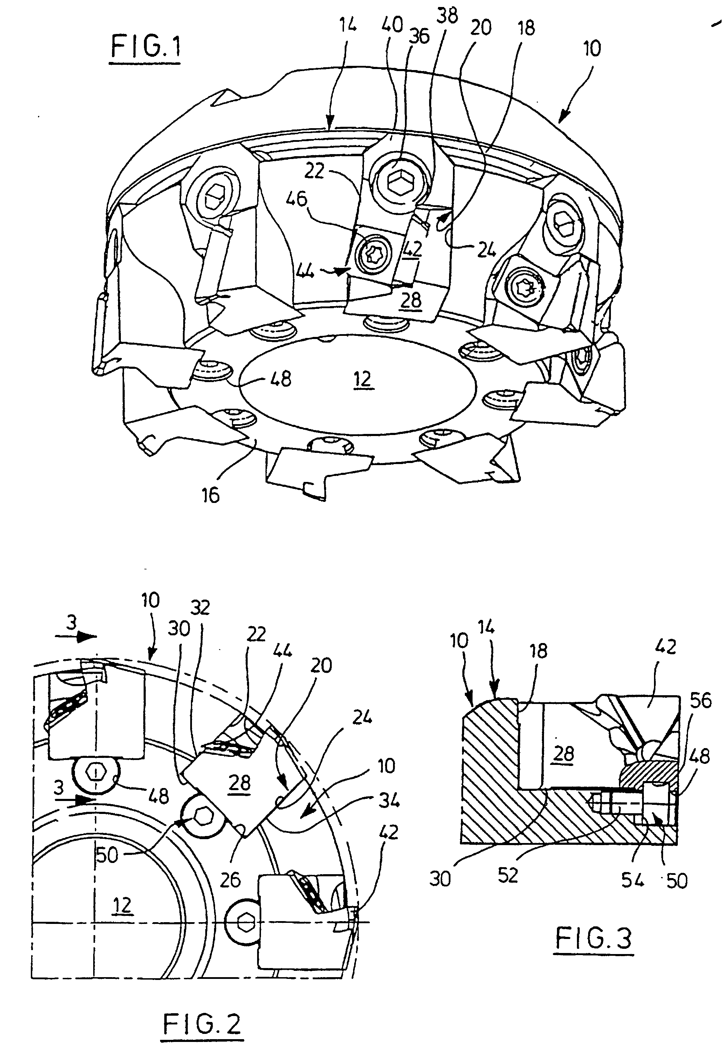

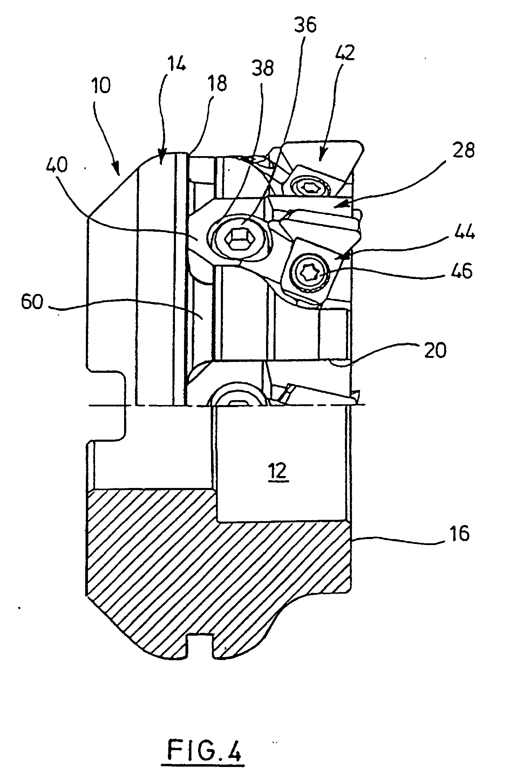

Der in den Figuren 1 bis 4 als bevorzugtes Ausführungsbeispiel dargestellte Eckfräser weist einen Trägerkörper 10 auf mit einer gestuften zentralen Durchbohrung 12 für die Adaptierung an die Spindel einer Werkzeugmaschine oder dergleichen. Der Trägerkörper 10 weist einen Stützabschnitt 14 in Form eines Ringbunds auf, der zur freien Stirnseite 16 des Trägerkörpers 10 eine radiale Stützfläche 18 aufweist. Zwischen der Stützfläche 18 und einer Stirnfläche 16 des Trägerkörpers 10 sind am Umfang des Trägerkörpers 10 in Abständen Taschen 20 geformt, die sich parallel zur Drehachse des Trägerkörper 10 erstrecken und gegenüberliegende Seitenwände 22, 24 und einen Boden 26 aufweisen. zwischen den Taschen 20 ist der Trägerkörper in seinem äußeren Durchmesser zur Stirnseite 16 hin stetig verringert, wobei sich in einer bevorzugten Ausbildung im Radialschnitt eine annähernd S-förmige Kontur ergibt.

Die Taschen 20 nehmen formschlüssig Kassetten 28 auf, d.h. sie sind annähernd im Paßsitz aufgenommen, in dem eine Unterseite 30 mit dem Boden 26 zusammenwirkt und Seitenwände 32, 34 mit den Seitenwänden 22, 24 der Taschen 20. Im Boden 26 ist eine radiale Gewindebohrung vorgesehen (nicht gezeigt) für eine Befestigungsschraube 36, die sich durch eine radiale Bohrung 38 in der Kassette 38 hindurcherstreckt, um die Kassette in der Tasche 20 festzulegen. Ein in der Breite verringerter Abschnitt 40 der Kassette 28 liegt nahe der Abstützfläche 18.

Jede Kassette 28 weist nicht bezeichnete Sitzflächen auf für die Aufnahme von Schneidplatten 42. Die Schneidplatten 42 werden in einer bevorzugten Ausbildung durch Spannhebel 44 festgelegt, die eine Durchbohrung aufweisen zur Aufnahme einer Klemmschraube 46, die in einer nicht gezeigten Gewindebohrung der Kassette 28 sitzt. Bein Anziehen der Klemmschraube 46 kippen die Spannhebel 44 gegen die zugeordnete Fläche der Schneidplatte 42 und legen diese an den Sitzflächen fest.

In der Stirnfläche 16 sind mittig ausgerichtet zu den Taschen 20 achsparallele Bohrungen 48 im Trägerkörper 10 geformt, in der Einstellschrauben 50 sitzen. Die Einstellschrauben 50 haben einen einen Gewindeabschnitt aufweisenden Schaft 52, der in einem entsprechenden Gewindeabschnitt der Bohrung 48 sitzt und einen Kopf 54, der in einem erweiterten Bohrungsabschnitt der Bohrung 48 sitzt und der in eine Nut 56 eingreift, die an der Unterseite 30 der Kassette 28 geformt ist. Wird die Schraube 50 gedreht, bewegt sich die Kassette 29 entsprechend mit in achsparalleler Richtung auf die Stirnseite 16 zu oder von dieser fort. Auf diese Weise kann die axiale Lage der Kassette 28 und damit die Schneidplatte in begrenztem Maße verstellt werden, wobei das Ausmaß von der Toleranz abhängt, die zwischen Befestigungsschraube 36 und Kassette 28 besteht.

Im Schruppeinsatz kann die Funktion der Einstellschraube 5β entfallen, und die Kassetten 28 werden sämtlich gegen die Stirnfläche 18 gelegt, so daß auch entsprechend große axiale Kräfte aufgenommen werden können.

Wie insbesondere aus Fig. 1 hervorgeht, ragen die Kassetten 28 nahe der Stirnseite 16 radial relative weit außerhalb des Körpers heraus. Dies beruht auf der entsprechenden Durchmesserverringerung des Trägerkörpers 10 in diesem Bereich, so daß ausreichend große Spankammern fiir die Spanabfuhr gebildet sind. Die Formgebung des Trägerkörpers 10 hat den weiteren Vorteil, daß relativ große Kassetten 28 zum Einsatz kommen können für entsprechend groß dimensionierte Schneidplatten. Wie erkennbar, ist es für den Trägerkörper 10 und die Befestigung unerheblich, ob Links- oder Rechtslauf vorgesehen ist.

In dem dargestellten Ausführungsbeispiel ist die Tasche 20 im Querschnitt rechteckig, so daß ein Einsetzen der Kassetten 28 in radialer Richtung möglich ist. Es ist jedoch auch denkbar, die Taschen 20 in radialer Richtung nach außen verengend auszuführen, z.B. nach Art eines Schwalbenschwanzes, um eine Sicherung gegen Fliehkräfte zu erhalten. Es versteht sich, daß auch ein anders gestalteter Formschluß als Fliehkraftsicherung verwendet werden kann.

Nur der Vollständigkeit halber sei darauf hingewiesen, daß die Stützfläche 18 zwischen den Taschen 20 eine Nut 60 bildet.

## Patentansprüche

1. Eck- oder Planfräser, der eine Antriebs- und eine Arbeitsseite sowie an seinem Umfang in gleichmäßig oder ungleichmäßig verteilten Abständen Taschen (20) aufweist, die sich parallel zur Drehachse des Trägerkörpers (10) erstrecken für die Aufnahme von Kassetten (28), wobei die Taschen (20) an eine radiale Anschlagfläche (18) eines Stützabschnitts (14) des Trägerkörpers (10) angrenzen, wobei die Kassetten (28) ihrerseits Sitzflächen aufweisen für die Aufnahme von Schneidplatten (42), einer Klemmschraube (46) zur Befestigung einer Schneidplatte in einer Kassette (42), einer Befestigungsschraube (36) zur Festlegung der Kassetten (42) in den Taschen (20) und Einstellschrauben (50) in Gewindebohrungen (48) des Trägerkörpers (10) für eine begrenzte axiale Verstellung der Kassetten (28) in den Taschen (20), **dadurch gekennzeichnet, dass** der Stützabschnitt (14) einteilig mit dem Trägerkörper (10) geformt ist, die Gewindebohrung (48) für die Einstellschrauben (50) von der freien Stirnseite (16) der Antriebsseite des Trägerkörpers (10) ausgehend annähernd parallel zur Drehachse des Trägerkörpers (10) angeordnet sind, der Kopf (54) der Einstellschrauben (50) mit einer Nut (56) am Boden (30) der Kassette (28) zusammenwirkt, wobei der Kopf (54) annähernd passend in der Nut (56) aufgenommen ist und der Trägerkörper (10) zur freien Stirnseite (16) hin einen stetig kleiner werdenden Außendurchmesser aufweist, so daß Spankammern für die Spanabfuhr gebildet werden.

2. Fräser nach Anspruch 1, **dadurch gekennzeichnet, dass** die Außenkontur des Trägerkörpers (10) im Radialschnitt zwischen den Taschen (20) annähernd S-förmig ist.

3. Fräser nach Anspruch 2, **dadurch gekennzeichnet, dass** eine S-Form so vorgesehen ist, dass ausreichend große Spanabfuhrräume erzeugt werden.

4. Fräser nach Anspruch 2, **dadurch gekennzeichnet, dass** eine S-Form so vorgesehen ist, dass der Fräser für Rechts- und Linkslauf eingesetzt werden kann.

5. Fräser nach einem der Ansprüche 1 bis 4, **dadurch gekennzeichnet, dass** die Kassette (28) einen Spannhebel (44) aufweist, die mittels einer Klemmschraube (46), die sich durch eine Bohrung des Spannhebels (44) erstreckt und in einer Gewindebohrung der Kassette (28) sitzt, kippend gegen die Schneidplatte (42) gespannt wird.

6. Fräser nach einem der Ansprüche 1 bis 4, **dadurch gekennzeichnet, dass** die Kassette (28) eine Gewindebohrung aufweist für die Befestigung der Schneidplatte (42) mittels einer durch eine Bohrung der Schneidplatte (42) sich erstreckenden Spannschraube.

7. Fräser nach einem der Ansprüche 1 bis 6, **dadurch gekennzeichnet, dass** die Kassetten (28) eine formschlüssige Fliehkraftsicherung aufweisen.

## Claims

1. A face-milling or comer milling cutter which has a driving side and a working side and, at its circumference, has pockets (20) which are regularly or irregularly spaced and extend in parallel with the axis of rotation of the carrier body (10) for the reception of cassettes (28) wherein the pockets (20) adjoin a radial stop surface (18) of a support portion (14) of the carrier body (10) with the cassettes (28), in turn, having seating surfaces for the reception of cutting inserts (42), a clamping screw (46) for fixing a cutting insert in a cassette (42), a fastening screw (36) for fixing the cassettes (42) in the pockets (20), and setting screws (50) in threaded bores (48) of the carrier body (10) for a limited axial displacement of the cassettes (42) in the pockets (20), **characterized in that** the support portion (42) is integrally formed with the carrier body (10), the threaded bore (48) for the setting screws (50), starting from the free front-end face (16) of the driving side of the carrier body (10), is arranged approximately in parallel with the axis of rotation of the carrier body (10), the head (54) of the setting screws (50) interacts with a groove (56) at the bottom (30) of the cassette (28) with the head (54) being nearly fittingly received in the groove (56) and the carrier body (10) has an outer diameter steadily decreasing towards the free front-end face (16) so as to form chip collecting chambers for a disposal of the chips.

2. The milling cutter as claimed in claim 1, **characterized in that** the outer contour of the carrier body (10) is approximately of an S shape in a radial section between the pockets (20).

3. The milling cutter as claimed in claim 2, **characterized in that** an S shape is provided in such a way that sufficiently large chip disposal spaces are produced.

4. The milling cutter as claimed in claim 2, **characterized in that** an S shape is provided in such a way that the milling cutter may be employed for both clockwise and anti-clockwise rotations.

5. The milling cutter as claimed in any one of claims 1 to 4, **characterized in that** the cassette (28) has a tension lever (44) which is tiltingly tensioned against the cutting insert (42) by means of a clamping screw (46) which extends through a bore of the tension lever (44) and is seated in a threaded bore of the cassette (28).

6. The milling cutter as claimed in any one of claims 1 to 4, **characterized in that** the cassette (28) has a threaded bore for fixing the cutting insert (42) by means of a tension screw extending through a bore of the cutting insert (42).

7. The milling cutter as claimed in any one of claims 1 to 6, **characterized in that** the cassettes (28) have a form-fit centrifugal-force safety device.

## Revendications

1. Fraise d'angle ou à surfacer, qui présente un côté d'entraînement et un côté de travail ainsi que, sur sa périphérie et à des distances réparties uniformément ou non uniformément, des poches (20) qui s'étendent parallèlement à l'axe de rotation du corps de support (10) pour le logement de cassettes (28), les poches (20) étant délimitées par une surface radiale de butée (18) d'une partie d'appui (14) du corps de support (10), les cassettes (28) présentant, de leurs côtés, des surfaces d'assise pour le logement de matrices de découpage (42), une vis de pression (46) pour la fixation d'une matrice de découpage dans une cassette (42), une vis de fixation (36) pour la fixation des cassettes (42) dans les poches (20) et des vis de réglage (50) dans des trous filetés (48) du corps de support (10) pour un réglage limité axial des cassettes (28) dans les poches,
**caractérisée en ce que** la partie d'appui (14) forme une seule pièce avec le corps de support (10), les trous filetés (48) pour les vis de réglage (50) sont placés en partant du côté frontal libre (16) du côté d'entraînement du corps de support (10) quasiment parallèle à l'axe de rotation du corps de support (10), la tête (54) des vis de réglage (50) coopère avec une rainure (56) sur le fond (30) de la cassette (28), la tête (54) étant logée presque à la mesure dans la rainure (56) et le corps de support (10) présentant, vers le côté frontal libre (16), un diamètre extérieur diminuant régulièrement, pour former des logements de copeaux pour le transport des copeaux.

2. Fraise selon la revendication 1, **caractérisée en ce que** le contour extérieur du corps de support (10) dans la partie radiale entre les poches (20) est approximativement en S.

3. Fraise selon la revendication 2, **caractérisée en ce qu'**une forme en S est prévue de façon à créer des espaces de transport de copeaux suffisamment grands.

4. Fraise selon la revendication 2, **caractérisée en ce qu'**une forme en S est prévue de telle manière que la fraise puisse être utilisée en marche vers le droite et vers la gauche.

5. Fraise selon l'une des revendications 1 à 4, **caractérisée en ce que** la cassette (28) présente un levier de serrage (44) qui est serré, à bascule contre la matrice de découpage (42), au moyen d'une vis de serrage (46) qui s'étend à travers un trou du levier de serrage (44) et est située dans un trou fileté de la cassette (28).

6. Fraise selon l'une des revendications 1 à 4, **caractérisée en ce que** la cassette (28) présente un trou fileté pour la fixation de la matrice de découpage (42) au moyen d'une vis de serrage qui s'étend à travers un trou de la matrice de découpage (42).

7. Fraise selon l'une des revendications 1 à 6, **caractérisée en ce que** les cassettes (28) présentent un dispositif de sécurité, à blocage par complémentarité de forme, contre la force centrifuge.
